# EUROPEAN PATENT SPECIFICATION

(11) **EP 2 747 607 B1**
(45) Date of publication and mention of the grant of the patent: **30.09.2015**
(21) Application number: 12824815.0
(22) Date of filing: 27.12.2012
(51) Int. Cl.: A47J 31/00

(54) **METHOD AND APPARATUS FOR PREPARING A BEVERAGE FROM A SOLVENT AND INGREDIENTS**
VERFAHREN UND VORRICHTUNG ZUR HERSTELLUNG EINES GETRÄNKS AUS EINEM LÖSUNGSMITTEL UND ANDEREN BESTANDTEILEN
PROCÉDÉ ET APPAREIL DE PRÉPARATION D'UNE BOISSON À PARTIR D'UN SOLVANT ET D'INGRÉDIENTS

(30) Priority: 29.12.2011 WO PCT/CN2011/084957
(43) Date of publication of application: 02.07.2014
(73) Proprietor: Koninklijke Philips N.V., 5656 AE Eindhoven (NL)
(72) Inventor: KELLY, Declan, Patrick, 5656 AE Eindhoven (NL); WANG, Guangwei, 5656 AE Eindhoven (NL)
(74) Representative: Coops, Peter
(86) International application number: PCT/IB2012/057756
(87) International publication number: WO 2013/098777

(56) References cited:
- EP-A1- 1 839 541
- WO-A2-2006/080843
- US-A1- 2006 096 465

## Description

### FIELD OF THE INVENTION

The invention relates to a method and apparatus for preparing a beverage from a solvent and ingredients.

The invention may be used, for example, in the field of beverage preparation.

### BACKGROUND OF THE INVENTION

Preparing beverages by brewing ingredients in a solvent is very popular. For example, if tea is used as ingredient, hot/boiling water is traditionally used as solvent for the brewing (i.e. infusing). After a given time duration, ingredients are taken out of the solvent, and the resulting solvent corresponds to the prepared beverage. A similar approach is used when beverages are prepared out of different ingredients, such as various herbs, plant leaves or plant roots. Such types of beverages provide health benefits that are highly regarded by consumers. One of the health benefits comes from antioxidants that are contained in the beverage, which is obtained after brewing. For example, catechins are the main type of antioxidants in tea. Such beverages are usually prepared by using dedicated domestic appliances, such as a tea maker or tea pot. However, when brewing ingredients by using traditional methods or appliances, not only antioxidants are extracted, but also caffeine which is not a healthy compound. Therefore, extracting more antioxidants will, unfortunately, also result in extracting more caffeine.

Patent published under reference WO 2006/080843 A2 relates to a method and an apparatus for preparing a beverage suitable for consumption from at least two ingredients and an amount of liquid such as water which is supplied to the ingredients, wherein a first ingredient comprises a substance to be extracted such as ground coffee, and a second ingredient comprises a substance such as milk powder/creamer, sugar and such additives, soluble in liquid such as water. During a first period, the liquid having, at most, a first temperature, is supplied to the first and second ingredient for obtaining a first beverage part, and, during a second period, the liquid having, at least, a second temperature is supplied to the first and second ingredient for obtaining a second beverage part. The first and the second beverage parts are combined for obtaining the beverage.

### OBJECT AND SUMMARY OF THE INVENTION

It is an objective of the invention to propose an improved method and apparatus for preparing a beverage from a solvent and ingredients. The invention is defined by the independent claims. The dependent claims define advantageous embodiments.

To this end, the method according to the invention comprises:
- a first step of setting the temperature of said solvent to a first given temperature,
- a first step of brewing said ingredients in said solvent, being at said first given temperature during a first period of time,
- a second step of setting the temperature of said solvent to a second given temperature,
- a second step of brewing said ingredients in said solvent, being at said second given temperature during a second period of time.

By infusing the ingredients successively in the solvent at different temperatures, the diffusion rate of the compounds that are contained in the ingredients are controlled, which results in extracting an amount of antioxidants that is higher than the amount of caffeine.

The invention also relates to an apparatus comprising the technical means to carry out the various steps of the method according to the invention.

Detailed explanations and other aspects of the invention will be given below.

### BRIEF DESCRIPTION OF THE DRAWINGS

The particular aspects of the invention will now be explained with reference to the embodiments described hereinafter and considered in connection with the accompanying drawings, in which identical parts or sub-steps are designated in the same manner:
Fig.1 depicts the flow chart of a method according to the invention,
Fig.2 illustrates the variations of the temperature of the solvent along the time axis, which gives the time needed for the different successive steps of brewing the beverage according to the invention,
Fig.3 depicts a first mode of implementation of an apparatus according to the invention,
Fig.4 depicts a second mode of implementation of an apparatus according to the invention,
Fig.5 depicts a pumping mechanism implemented in an apparatus according to the invention,
Fig 6 depicts a first implementation for a chamber in an apparatus according to the invention,
Fig 7 depicts a second implementation for a chamber in an apparatus according to the invention,
Fig.8 illustrates the diffusion curves of antioxidants and caffeine for a given ingredient along the time axis.

### DETAILED DESCRIPTION OF THE INVENTION

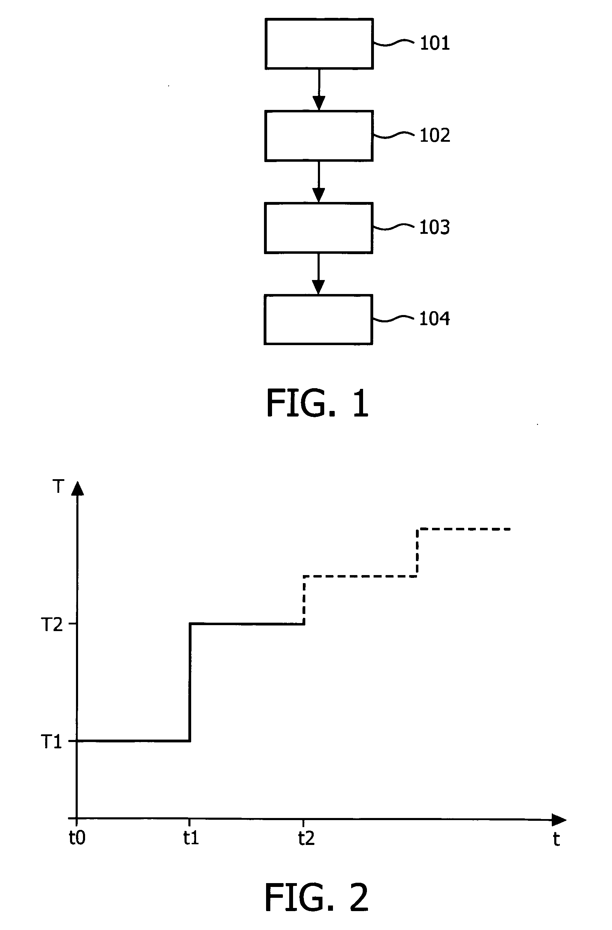

Fig.1 depicts the flow chart of a method according to the invention to prepare a beverage from a solvent and ingredients. The method comprises:
- a first step of setting 101 the temperature of said solvent to a first given temperature T1;
- a first step of brewing 102 said ingredients in said solvent being at said first given temperature T1 during a first period of time DT1;
- a second step of setting 103 the temperature of said solvent to a second given temperature T2;
- a second step of brewing 104 said ingredients in said solvent being at said second given temperature T2 during a second period of time DT2.

The ingredients IG may correspond to, for example, any type of tea leaves, coffee, herbs, roots, fruits, or a mix of those ingredients.

The solvent may correspond to, for example, water, mineral water, tap water, salted water, alcohol, or a mix of those solvents.

The method according to the invention follows a multiple-step approach in the sense that the brewing of the ingredients in the solvent is performed successively in a sequence of multiple steps. The solvent which is used during a given step of brewing is the solvent resulting from the brewing of a previous step of brewing. In other words, a fresh and new solvent is not added during the brewing cycle, and the solvent is also not changed during the brewing cycle.

The number of successive steps of brewing is at least two, as illustrated in Fig.1, but is not limited to two successive steps. It could thus be considered to have a third, fourth, fifth, etc.step of brewing. For each step of brewing, the characteristics of the brewing are forced and controlled tocreate certain states or values. This is particularly advantageous because each step of brewing is made in which the solvent is taking different temperatures to accelerate the extraction of the antioxidants that are contained in the ingredients.

Fig.2 illustrates the variations of the temperature T of the solvent along the time axis t, which stands for the different successive steps of brewing:
- the first period of time DT1 = [t0;t1] is the time interval during which the first step of setting 101 the temperature of the solvent to a first given temperature T1 is performed, as well as the first step of brewing 102 the ingredients in the solvent.
- the second period of time DT2 = [t1;t2] is the time interval during which the second step of setting 103 the temperature of the solvent to a second given temperature T2 is performed, as well as the second step of brewing 104 the ingredients in the solvent.

Table 1 below shows the measured results of the ratio of catechins and caffeine when green tea is used as ingredient and is brewed for 5 minutes at 90 °C, and for green tea being brewed for 5 minutes at 100 °C, according to a traditional way of brewing. The ratio of catechins to caffeine is 4.5 and 4.42, respectively. Those values are used as reference in order to be compared with the measured results from a multiple-step brewing cycle according to the invention.

**Table 1: Results for a single step of brewing at 90 °C, and for a single step of brewing at 100 °C.**

| | | |
|---|---|---|
| Brewing Temperature (°C) | 90 | 100 |
| Duration of brewing (min.) | 5 | 5 |
| Total catechins (average weight percentage, i.e. the ratio of the total weight of all catechins compounds / total weight of dry ingredients) | 10.94% | 10.39% |
| Caffeine (average weight percentage, i.e. the ratio of the total weight of caffeine/total weight of dry tea leaves) | 2.43% | 2.35% |
| Total catechins/caffeine (ratio) | 4.5 | 4.42 |
| Reference | 4.5 | 4.42 |

Table 2 below shows the measured results of the ratio of catechins and caffeine when green tea is used as ingredient and is brewed according to the invention. In the first case, green tea is brewed at 30 °C during 3 minutes then at 90 °C during 2 minutes. In the second case, green tea is brewed at 40 °C during 3 minutes then at 90 °C during 2 minutes.

Compared to the reference in which the brewing was performed at 90 °C during 5 minutes (i.e. one single step of brewing), the results of Table 2 illustrate that for the same brewing duration of 5 minutes, the multiple-step method according to the invention results in an increase of the amount of catechins and a decrease of the amount of caffeine. The amount of catechins is increased by 7% on both cases, the amount of caffeine is decreased by 11% in both cases, so that the ratio of catechins to caffeine is increased by 20% in both cases.

| | | |
|---|---|---|
| First given temperature (T1) (°C) | 30 | 40 |
| Second given temperature (T2) (°C) | 90 | 90 |
| Duration of the first step of brewing (min.) | 3 | 3 |
| Duration of the second step of brewing (min.) | 2 | 2 |
| Total catechins (average weight percentage, i.e. the ratio of the total weight of all catechins compounds / total weight of dry ingredients) | 11.73% | 11.73% |
| Caffeine (average weight percentage, i.e. the ratio of the total weight of caffeine/total weight of dry tea leaves) | 2.153% | 2.171% |
| Total catechins/caffeine (ratio) | 5.45 | 5.4 |
| Compared to reference (5 min. at 90 °C) | 21% | 20% |
| Catechins Increase | 7% | 7% |
| Caffeine Increase | -11% | -11% |

| | | |
|---|---|---|
| Table 2: Results for multiple-step brewing according to the invention compared to a single-step brewing at 90 °C. | | |

Table 3 below shows the measured results of the ratio of catechins and caffeine when green tea is used as ingredient and is brewed according to the invention. In the first case, green tea is brewed at 20 °C during 2 minutes and subsequently at 100 °C during 3 minutes. In the second case, green tea is brewed at 40 °C during 2.5 minutes and subsequently at 100 °C during 2.5 minutes.

Compared to the reference in which the brewing was performed at 100 °C during 5 minutes (i.e. one single step of brewing), the results of Table 3 illustrate that for the same brewing duration of 5 minutes, the multiple-step method according to the invention results in an increase of the amount of catechins and a decrease of the amount of caffeine. In the first case, the amount of catechins is increased by 27% with a corresponding increase of caffeine of only 4%, which results in an increase of the catechins to caffeine ratio of 22%. In the second case, the amount of catechins is increased by 26% with a corresponding increase of caffeine of only 5%, which results in an increase of the catechins to caffeine ratio of 20%.

| | | |
|---|---|---|
| First given temperature (T1) (°C) | 20 | 40 |
| Second given temperature (T2) (°C) | 100 | 100 |
| Duration of the first step of brewing (min) | 2 | 2.5 |
| Duration of the second step of brewing (min) | 3 | 2.5 |
| Total catechins (average weight percentage, i.e. ratio of the total weight of all catechins compounds / total weight of dry ingredients) | 13.183% | 13.044% |
| Caffeine (average weight percentage, i.e. ratio of total weight of caffeine/total weight of dry tea leaves) | 2.4388% | 2.4616% |
| Total catechins/caffeine (ratio) | 5.41 | 5.3 |
| Compared to reference (5 min at 100°C) | 22% | 20% |
| Catechins Increase | 27% | 26% |
| Caffeine Increase | 4% | 5% |

| | | |
|---|---|---|
| Table 3: Results for multiple-step brewing according to the invention compared to a single-step brewing at 100 °C. | | |

As illustrated in the above tables, parameters, such as the number of successive steps of brewing, the temperature at each step, and the brewing duration of each step of brewing, influence the results regarding the amount of antioxidants which is extracted, or regarding the ratio between the total amount of catechins and caffeine. The choice of those parameters can be optimized to extract a higher amount of antioxidants in a given ingredient (or a mix of ingredients), or to increase the ratio between the total amount of catechins and caffeine.

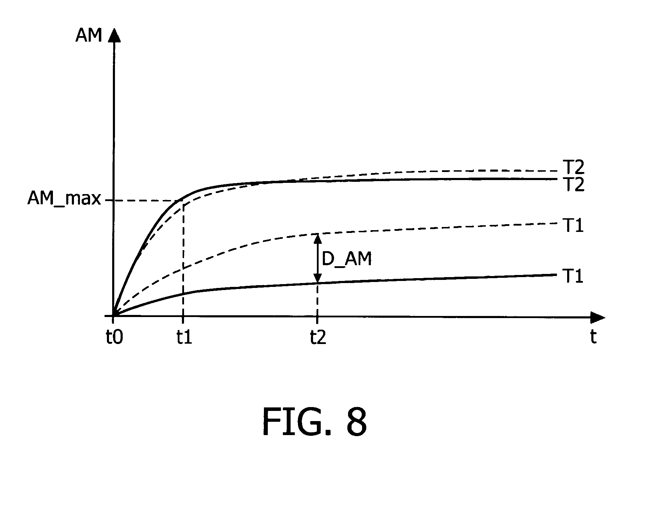

The optimization of those parameters is preferably done based on the diffusion curves of antioxidants and caffeine contained in a given ingredient. Those curves can be derived from preliminary measurements. Fig. 8 illustrates the diffusion curves of antioxidants and caffeine for a given ingredient along the time axis t at different temperatures T1 and T2. Only two temperatures are considered here for the sake of simplifying explanation, but more curves measured at other temperatures could advantageously be measured and considered. The vertical axis corresponds to the amount AM of compounds (i.e. antioxidants, caffeine), for example regarding the average weight percentage. The amount of diffused caffeine along the time is illustrated with plain lines, while the amount of diffused antioxidants along the time axis is illustrated with dotted lines.

Those curves make it possible to identify at which temperature the overall ratio of antioxidants/caffeine is the largest; which, in this example, is at temperature T1, as illustrated by the large difference D_AM. Those curves also make it possible to identify at what temperature the diffusion of antioxidants is the highest; which, in this example, is at temperature T2, as illustrated by the maximum AM_max. Based on those indications, a first step of brewing can preferably be made at a temperature equal to T1, followed by a second step of brewing that is preferably made at a temperature equal to T2.

Those curves also make it possible to identify at what time the key changes in the diffusion occur. In the present example, for a temperature T1, the ratio antioxidants/caffeine reaches a maximum at time t2. This indication is used to set the duration of the first step of brewing at a value equal to the difference (t2-t0). Also, for a temperature T2, the maximum speed of the diffusion is reached at time t1. This indication is used to set the duration of the second step of brewing at a value equal to the difference (t1-t0).

The number of successive steps of brewing can preferably be determined based on a given targeted amount of antioxidants that needs to be extracted from the ingredients; or alternatively, based on a given targeted ratio antioxidants/caffeine that needs to be reached. To this end, the number of successive steps of brewing is such that as long as the targeted amount has not been reached, an additional successive step of brewing is performed.

Preferably, the first given temperature T1 is lower than said second given temperature T2, as illustrated via the examples of Table 2 and Table 3. This is preferred for the ease of implementation. Indeed, since the solvent after a given step of brewing is used for the subsequent step of brewing, without removing the ingredients out of this solvent, the setting of the temperature of the solvent at the second given temperature T2 can be simply obtained by heating the solvent from temperature T1 to T2.

Alternatively, the first given temperature T1 is higher than said second given temperature T2. In this case, the second step of setting 103 may preferably comprise a step of cooling the solvent from said first given temperature T1 to said second given temperature T2.

Advantageously, the first step of brewing 102 comprises a step of spreading the solvent onto the ingredients at a first given flow-rate R1, and the second step of brewing 104 comprises a step of spreading said solvent onto the ingredients at a second given flow-rate R2.

Considering that each successive step of brewing extracts relatively more or less of the specific compounds from the ingredients, adjusting the flow rate helps to amplify or reduce this effect. Different flow rates of the solvent during the steps of brewing are beneficial since a higher flow-rate contributes to the extraction of more antioxidants from ingredients, in particular to extract more catechins from green tea. Advantageously, the flow rate of solvent during a given step of brewing according to the invention can be set between 0 and 5 litres per minute.

Advantageously, the method according to the invention further comprises a first step of setting the pressure to a first given pressure level P1 during said first step of brewing 102, and a second step of setting the pressure to a second given pressure level P2 during said second step of brewing 104. In other words, different pressure is used at each step of brewing.

For example, a pressure P1 lower than the normal atmospheric pressure can be used to boil solvent at a lower temperature. Lowering the pressure will thus lower the boiling point, therefore it is possible to boil the solvent at each step even if the temperature is relatively low. Boiling the solvent has the advantage of creating some bubbles in the solvent which cause the flow of solvent around the ingredients to improve the extraction of antioxidants.

For example, a pressure P2 higher than the normal atmospheric pressure can be used to boil a solvent at higher temperature; e.g. higher than 100 °C if the solvent is water.

Advantageously, the method according to the invention further comprises a step of modifying the chemical property of the solvent before starting the second step of brewing 104. In other words, the solvent property can be modified before the start of a step of brewing in order to optimize the extraction of antioxidants from the ingredients.

Advantageously, the chemical property of the solvent which is modified is the pH.

Advantageously, the chemical property of the solvent which is modified is the Hardness. It can be shown that with the increase of hardness in the solvent (i.e. an increase of the concentration of ions Ca²⁺ and Mg²⁺), the concentration of antioxidants gets decreased significantly. As a consequence, in order to extract more antioxidants (i.e. catechins from tea), a step of softening the solvent is performed to reach a lower hardness of the solvent. To this end, the solvent can pass through an ion exchange resin material in which ions Ca²⁺ and Mg²⁺ contained in the solvent are exchanged with ions Na⁺ contained in the resin, thus reducing the concentration of ions Ca²⁺ and Mg²⁺ in the solvent.

The invention also relates to an apparatus for preparing a beverage from a solvent and ingredients, and which comprises the means to carry out the various steps of the method according to the invention described above.

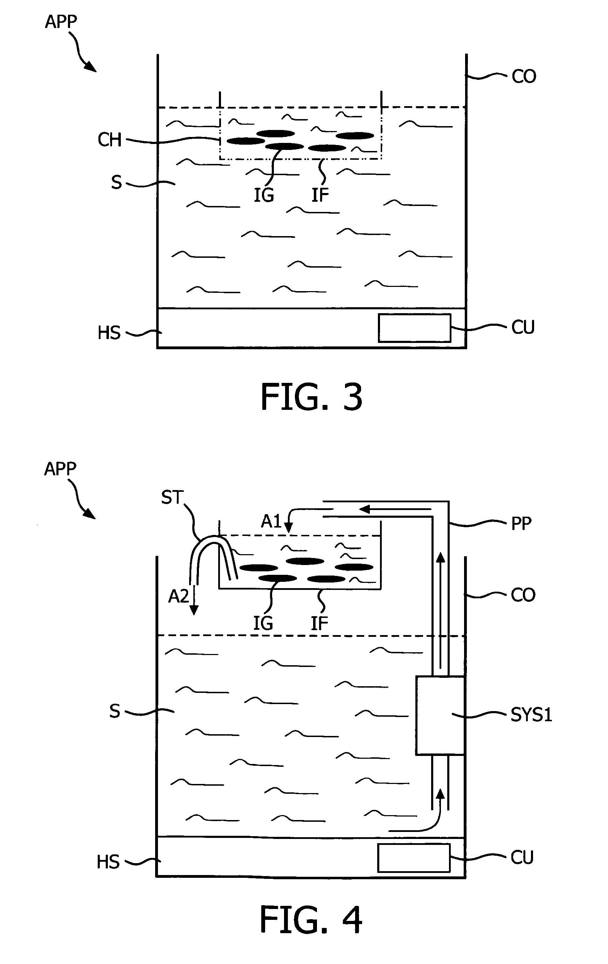

Fig. 3 depicts a first mode of implementation of an apparatus APP according to the invention. This apparatus comprises:
- a container CO for containing said solvent;
- an infuser IF for containing said ingredients;
- a first system SYS1 for carrying said solvent from said container CO into said infuser IF;
- a second system SYS2 for setting the temperature of the solvent to a first given temperature T1 during a first period of time DT1, and for setting the temperature of the solvent to a second given temperature T2 during a second period of time DT2.

The infuser is placed inside the container CO, and the first system SYS1 comprises a communication channel CH to link the inside part of the container CO and the inside part of the infuser IF. For example, the communication channel CH corresponds to short tubes (not shown) passing through the walls of the infuser or to a plurality of holes in the walls of the infuser, as illustrated by dotted style in the wall of infuser IF. With such an arrangement, the solvent in the container CO can communicate with the inside part of the infuser IF. The infuser is maintained in position by legs (not shown) to the walls of the container.

The second system SYS2 for setting the temperature of the solvent may correspond to a heating system HS placed at the bottom part of the container. A control unit CU is used to control the heating system HS, for example by regulating the electrical power that is supplied to the heating system over the first period of time DT1 and the second period of time DT2; the higher the electrical power that is supplied, the higher the temperature will be.

Fig. 4 depicts a second mode of implementation of an apparatus APP according to the invention. This apparatus comprises:
- a container CO for containing said solvent,
- an infuser IF for containing said ingredients,
- a first system SYS1 for carrying said solvent from said container CO into said infuser IF,
- a second system SYS2 for setting the temperature of the solvent to a first given temperature T1 during a first period of time DT1, and for setting the temperature of the solvent to a second given temperature T2 during a second period of time DT2.

The infuser is placed outside the container CO, preferably above the container CO.The first system SYS1 comprises a pumping mechanism to carry solvent from said container CO to said infuser IF. Also, the apparatus APP further comprises a return channel to carry the solvent in the infuser IF back to the container CO, for example a siphon tube ST.

The infuser IF is, for example, fixed above container CO by legs or an equivalent (not shown), which extends from the container's wall to the infuser.

The first system SYS1 is used to circulate the solvent S from the lower part of container CO to the upper part of the infuser IF via a pipe PP.

The system SYS1 corresponds, for example, to an electrical fluid pump.

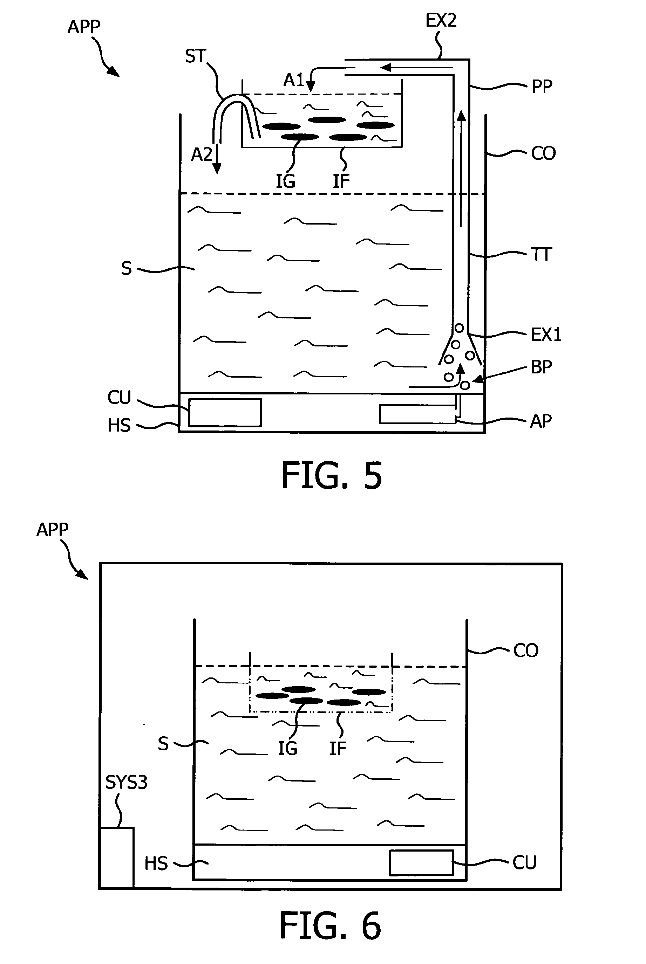

Alternatively, as depicted in Fig. 5, the system SYS1 corresponds to a pumping mechanism based on percolation effect, and which comprises:
- a tube TT that is placed in the container CO, the tube TT having a first extremity EX1 placed at the proximity of a bottom part BP of the container CO, and a second extremity EX2 reaching the infuser IF, and
- an air pump AP for generating an air flow that exits at said bottom part BP and enters the tube at the first extremity EX1, and for carrying the solvent in the tube TT from the first extremity EX1 to the second extremity EX2.

The air flow is illustrated by white circles in the solvent S, under the first extremity EX1. The air pump AP may be of any type, but is preferably a diaphragm air pump. Air is pumped from the outside of the container. It is appreciated that the tube TT preferably extends vertically, so as to facilitate the movement of the air flow and the solvent therein. However, the tube TT may also be such that its main axis departs from the vertical direction, for example by an angle between 0 and 45 degrees. Also, the tube TT is preferably cylindrical-shaped, but may also have different shapes, such as a corkscrew-shape, or a curved-shape. The tube TT advantageously has an average diameter between 5 and 7 millimeters, or an average sectional area between 19.6 and 38.5 square millimeters. Advantageously, as illustrated, the first extremity EX1 of tube TT has a funnel-shaped entrance so that air flow generated by the air pump AP enters the tube TT more easily. If the apparatus according to the invention falls under the home-appliances category, the air pump AP advantageously generates an air flow between 1 and 2 liters per minute, and the pumping in the tube is efficient if at least 80 % of this air flow enters the tube at the first extremity EX1. If the apparatus according to the invention falls under the semi-professional or professional category, the air pump AP advantageously generates an air flow between 10 and 20 liters per minute, and the pumping in the tube is efficient if at least 80 % of this air flow enters the tube at the first extremity EX1. By generating air flow by means of the air pump instead of vapor bubbles that are naturally generated by locally boiling water, which is the case with a conventional percolator, the solvent can reach the upper part of the tube TT while having a temperature much below the boiling temperature of the solvent; a temperature which can thus be adapted to the ingredients used in the brewing.

Alternatively, the first system SYS1 corresponds to a pumping mechanism that is driven by steam (not shown), which is generated after heating the solvent in the container.

The solvent leaving the pipe PP, as illustrated by arrows A1, drops into infuser IF. The solvent in the infuser IF then drops back into container CO via the return channel; for example via the siphon tube ST, as illustrated by arrows A2. The successive steps of circulating the solvent from the container CO into the pipe PP, then infusing the ingredients in the infuser IF in the solvent, which is contained in the infuser, and subsequently dropping the solvent in the infuser back into the container, will constitute a closed brewing cycle that is continued until all these various successive steps of brewing are finished.

The second system SYS2 for setting the temperature of the solvent may correspond to a heating system HS placed at the bottom part of the container. A control unit CU is used to control the heating system HS, for example by regulating the electrical power that is supplied to the heating system over the first period of time DT1 and the second period of time DT2.

Advantageously, the pumping mechanism of the first system SYS1 is adapted to carry solvent at a first given flow-rate R1 during said first period of time DT1, and adapted to carry solvent at a second given flow-rate R2 during said second period of time DT2.

If an electrical fluid pump is used for the first system SYS1, this can for example be achieved by increasing the rotation speed of the rotor. If a pumping mechanism based on percolation effect is used, this can for example be achieved by increasing the air flow inside tube TT.

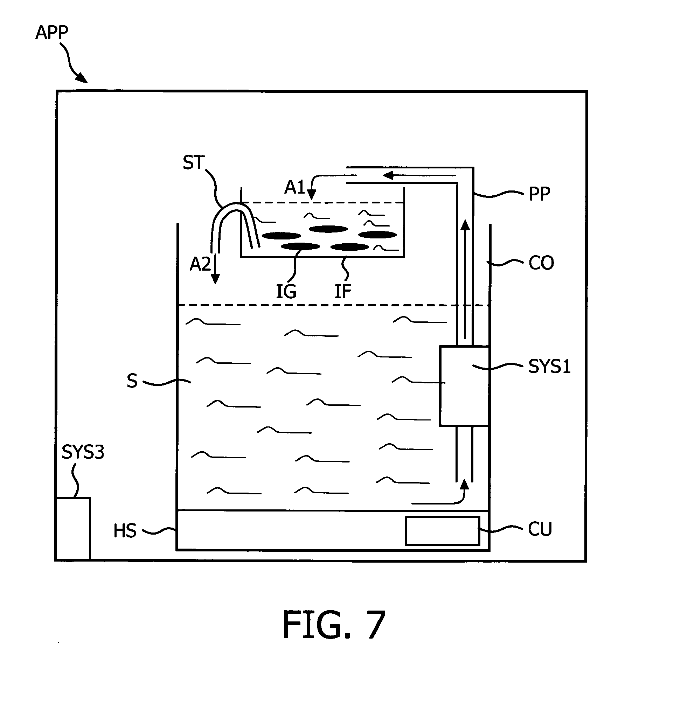

Advantageously, the apparatus APP according to the invention further comprises a chamber CB to enclose the infuser IF, and a third system SYS3 for setting the pressure inside said chamber CB to a first given pressure level P1 during said first period of time DT1 and to a second given pressure level P2 during said second period of time DT2. Fig. 6 depicts a chamber CB which is placed around the container CO, for an apparatus as described along with Fig. 3. Fig. 7 depicts a chamber CB which is placed around the container CO, for an apparatus as described along with Fig. 4-5. The third system SYS3 may correspond to an air pump associated with regulation means to ensure that during the first period of time DT1 and the second period of time DT2, the pressure level inside the chamber CB remains regulated at a level of P1 and P2, respectively.

Advantageously, the apparatus APP according to the invention further comprises an ion exchange resin material through which said solvent (S) is intended to pass through in order to modify the chemical property of said solvent. For example, the ion exchange resin can be placed via an actuator along the exit path of tube TT when the softening of the solvent is needed (not shown), and removed by said actuator when the softening of the solvent is no more needed.

Other variations to the disclosed embodiments can be understood and effected by those skilled in the art in practicing the claimed invention, from a study of the drawings, the disclosure, and the appended claims. In the claims, the word "comprising" does not exclude other elements or steps, and the indefinite article "a" or "an" does not exclude a plurality. A single unit may fulfill the functions of several items recited in the claims. The mere fact that certain measures are recited in mutually different dependent claims does not indicate that a combination of these measured cannot be used to advantage. Any reference sign in the claims should not be construed as limiting the scope.

## Claims

1. A method of preparing a beverage from a solvent and ingredients, said method comprising:
- a first step of setting (101) the temperature of said solvent to a first given temperature (T1),
- a first step of brewing (102) said ingredients in said solvent being at said first given temperature (T1) during a first period of time (DT1),
**characterized in that** the method also comprises:
- a second step of setting (103) the temperature of the solvent resulting from the first step of brewing (102) to a second given temperature (T2),
- a second step of brewing (104) said ingredients in said solvent resulting from the first step of brewing (102) being at said second given temperature (T2) during a second period of time (DT2).

2. A method as claimed in claim 1, wherein said first given temperature (T1) is lower than said second given temperature (T2).

3. A method as claimed in claim 1, wherein said first given temperature (T1) is higher than said second given temperature (T2).

4. A method as claimed in claim 3, wherein said second step of setting (103) comprises a step of cooling said solvent from said first given temperature (T1) to said second given temperature (T2).

5. A method as claimed in claim 1, wherein:
- said first step of brewing (102) comprises a step of spreading said solvent on the ingredients at a first given flow-rate (R1),
- said second step of brewing (104) comprises a step of spreading said solvent on the ingredients at a second given flow-rate (R2),

6. A method as claimed in claim 1, further comprising:
- a first step of setting the pressure to a first given pressure level (P1) during said first step of brewing (102),
- a second step of setting the pressure to a second given pressure level (P2) during said second step of brewing (104).

7. A method as claimed in claim 1, further comprising a step of modifying the chemical property of the solvent before starting said second step of brewing (104).

8. A method as claimed in claim 7, wherein said chemical property is the pH.

9. A method as claimed in claim 7, wherein said chemical property is the Hardness.

10. An apparatus (APP) for preparing a beverage from a solvent (S) and ingredients (IG), said apparatus comprising:
- a container (CO) for containing said solvent,
- an infuser (IF) for containing said ingredients,
- a first system (SYS 1) for carrying said solvent from said container (CO) into said infuser (IF),
**characterized in that** the apparatus also comprises:
- a second system (SYS2) for setting the temperature of the solvent to be carried to said infuser (IF) to a first given temperature (T1) during a first period of time (DT1), and for setting the temperature of the solvent resulting from the infusion of ingredients with solvent at said first given temperature (T1), to a second given temperature (T2) during a second period of time (DT2).

11. An apparatus as claimed in claim 10, wherein:
- said infuser (IF) is placed inside the container (CO), and
- said first system (SYS1) comprises a communication channel (CH) linking the inside part of the container (CO) and the inside part of the infuser (IF).

12. An apparatus as claimed in claim 10, wherein:
- said infuser (IF) is placed outside the container (CO),
- said first system (SYS1) comprises a pumping mechanism to carry the solvent (S) from said container (CO) to said infuser (IF),
- said apparatus further comprises a return channel to carry the solvent (S) from said infuser (IF) to said container (CO).

13. An apparatus as claimed in claim 12, wherein said pumping mechanism is adapted to carry the solvent (S) at a first given flow-rate (R1) during said first period of time (DT1), and adapted to carry the solvent (S) at a second given flow-rate (R2) during said second period of time (DT2).

14. An apparatus as claimed in claim 10, further comprising a chamber (CB) to enclose said infuser (IF), and a third system (SYS3) for setting the pressure inside said chamber (CB) to a first given pressure level (P1) during said first period of time (DT1) and to a second given pressure level (P2) during said second period of time (DT2).

15. An apparatus as claimed in claim 10, further comprising an ion exchange resin material through which said solvent (S) is intended to pass in order to modify the chemical property of said solvent.

## Patentansprüche

1. Verfahren zum Zubereiten eines Getränkes aus einem Lösungsmittel und Zutaten, wobei das besagte Verfahren folgendes umfasst:
- einen ersten Schritt zum Einstellen (101) der Temperatur des besagten Lösungsmittels auf eine erste gegebene Temperatur (T1),
- einen ersten Schritt zum Aufbrühen (102) der besagten Zutaten im besagten Lösungsmittel, das sich auf der besagten ersten gegebenen Temperatur (T1) befindet, während eines ersten Zeitraums (DT1),
**dadurch gekennzeichnet, dass** das Verfahren auch folgendes umfasst:
- einen zweiten Schritt zum Einstellen (103) der Temperatur des Lösungsmittels, das aus dem ersten Schritt des Aufbrühens (102) entsteht, auf eine zweite gegebene Temperatur (T2),
- einen zweiten Schritt zum Aufbrühen (104) der besagten Zutaten im besagten Lösungsmittel, das aus dem ersten Schritt des Aufbrühens (102) entsteht, das sich auf der besagten zweiten gegebenen Temperatur (T2) befindet, während eines zweiten Zeitraums (DT2).

2. Verfahren nach Anspruch 1, wobei die besagte erste gegebene Temperatur (T1) niedriger ist, als die besagte zweite gegebene Temperatur (T2).

3. Verfahren nach Anspruch 1, wobei die besagte erste gegebene Temperatur (T1) höher ist, als die besagte zweite gegebene Temperatur (T2).

4. Verfahren nach Anspruch 3, wobei der besagte zweite Schritt zum Einstellen (103) einen Schritt zum Kühlen des besagten Lösungsmittels von der besagten ersten gegebenen Temperatur (T1) auf die besagte zweite gegebene Temperatur (T2) umfasst.

5. Verfahren nach Anspruch 1, wobei:
- der besagte erste Schritt zum Aufbrühen (102) einen Schritt zum Ausbreiten des besagten Lösungsmittels auf die Zutaten mit einer ersten gegebenen Durchflussmenge (R1) umfasst,
- der besagte zweite Schritt zum Aufbrühen (104) einen Schritt zum Ausbreiten des besagten Lösungsmittels auf die Zutaten mit einer zweiten gegebenen Durchflussmenge (R2) umfasst.

6. Verfahren nach Anspruch 1, das darüber hinaus folgendes umfasst:
- einen ersten Schritt zum Einstellen des Druckes auf ein erstes gegebenes Druckniveau (P1) während des besagten ersten Schrittes zum Aufbrühen (102),
- einen zweiten Schritt zum Einstellen des Druckes auf ein zweites gegebenes Druckniveau (P2) während des besagten zweiten Schrittes zum Aufbrühen (104).

7. Verfahren nach Anspruch 1, das darüber hinaus einen Schritt zum Verändern der chemischen Eigenschaft des Lösungsmittels vor Beginn des besagten zweiten Schrittes zum Aufbrühen (104) umfasst.

8. Verfahren nach Anspruch 7, wobei die besagte chemische Eigenschaft der pH-Wert ist.

9. Verfahren nach Anspruch 7, wobei die besagte chemische Eigenschaft die Härte ist.

10. Gerät (APP) zur Zubereitung eines Getränkes aus einem Lösungsmittel (S) und Zutaten (IG), wobei das besagte Gerät folgendes umfasst:
- einen Behälter (CO) zur Aufnahme des besagten Lösungsmittels,
- eine Brüheinheit (IF) zur Aufnahme der besagten Zutaten,
- ein erstes System (SYS1) um Befördern des besagten Lösungsmittels aus dem besagten Behälter (CO) in die besagte Brüheinheit (IF),
**dadurch gekennzeichnet, dass** das Gerät ebenso folgendes umfasst:
- ein zweites System (SYS2) zum Einstellen der Temperatur des Lösungsmittels, das zur besagten Brüheinheit (IF) befördert werden soll, auf eine erste gegebene Temperatur (T1) während eines ersten Zeitraums (DT1), und zum Einstellen der Temperatur des Lösungsmittels, das aus der Infusion von Zutaten mit dem Lösungsmittel bei der besagten ersten gegebenen Temperatur (T1) entsteht, auf eine zweite gegebene Temperatur (T2) während eines zweiten Zeitraums (DT2).

11. Gerät nach Anspruch 10, wobei:
- die besagte Brüheinheit (IF) in den Behälter (CO) gestellt wird, und
- das besagte erste System (SYS1) einen Kommunikationskanal (CH) umfasst, der den inneren Abschnitt des Behälters (CO) mit dem inneren Abschnitt der Brüheinheit (IF) verbindet.

12. Gerät nach Anspruch 10, wobei:
- die besagte Brüheinheit (IF) außerhalb des Behälters (CO) platziert wird,
- das besagte erste System (SYS1) einen Pumpmechanismus zum Befördern des Lösungsmittels (S) aus dem besagten Behälter (CO) in die besagte Brüheinheit (IF) umfasst,
- das Gerät darüber hinaus einen Rückführkanal zum Befördern des Lösungsmittels (S) aus der besagten Brüheinheit (IF) in den besagten Behälter (CO) umfasst.

13. Gerät nach Anspruch 12, wobei sich der besagte Pumpmechanismus dazu eignet, um das Lösungsmittel (S) mit einer ersten Durchflussmenge (R1) während des besagten ersten Zeitraumes (DT1) zu befördern, und sich dazu eignet, um das Lösungsmittel (S) mit einer zweiten Durchflussmenge (R2) während des besagten zweiten Zeitraumes (DT2) zu befördern.

14. Gerät nach Anspruch 10, das darüber hinaus eine Kammer (CB) zum Einschließen der besagten Brüheinheit (IF), und ein drittes System (SYS3) zum Einstellen des Drucks innerhalb der Kammer (CB) auf ein erstes gegebenes Druckniveau (P1) während des besagten ersten Zeitraumes (DT1), und auf ein zweites gegebenes Druckniveau (P2) während des besagten zweiten Zeitraumes (DT2) umfasst.

15. Gerät nach Anspruch 10, das darüber hinaus ein Ionentauscher-Harzmaterial umfasst, durch das der Durchlauf des besagten Lösungsmittels (S) vorgesehen ist, um die chemische Eigenschaft des besagten Lösungsmittels zu ändern.

## Revendications

1. Procédé de préparation d'une boisson à partir d'un solvant et d'ingrédients, ledit procédé comprenant :
- une première étape de réglage (101) de la température dudit solvant à une première température donnée (T1),
- une première étape d'infusion (102) desdits ingrédients dans ledit solvant qui est à ladite première température donnée (T1) pendant une première période de temps (DT1),
**caractérisé en ce que** le procédé comprend également :
- une deuxième étape de réglage (103) de la température du solvant résultant de la première étape d'infusion (102) à une deuxième température donnée (T2),
- une deuxième étape d'infusion (104) desdits ingrédients dans ledit solvant résultant de la première étape d'infusion (102) qui est à ladite deuxième température donnée (T2) pendant une deuxième période de temps (DT2).

2. Procédé selon la revendication 1, dans lequel ladite première température donnée (T1) est inférieure à ladite deuxième température donnée (T2).

3. Procédé selon la revendication 1, dans lequel ladite première température donnée (T1) est supérieure à ladite deuxième température donnée (T2).

4. Procédé selon la revendication 3, dans lequel ladite deuxième étape de réglage (103) comprend une étape de refroidissement dudit solvant de ladite première température donnée (T1) à ladite deuxième température donnée (T2).

5. Procédé selon la revendication 1, dans lequel :
- ladite première étape d'infusion (102) comprend une étape d'étalement dudit solvant sur les ingrédients à un premier débit donné (R1),
- ladite deuxième étape d'infusion (104) comprend une étape d'étalement dudit solvant sur les ingrédients à un deuxième débit donné (R2).

6. Procédé selon la revendication 1, comprenant en outre :
- une première étape de réglage de la pression à un premier niveau de pression donné (P1) pendant ladite première étape d'infusion (102),
- une deuxième étape de réglage de la pression à un deuxième niveau de pression donné (P2) pendant ladite deuxième étape d'infusion (104).

7. Procédé selon la revendication 1, comprenant en outre une étape de modification de la propriété chimique du solvant avant le début de ladite deuxième étape d'infusion (104).

8. Procédé selon la revendication 7, dans lequel ladite propriété chimique est le pH.

9. Procédé selon la revendication 7, dans lequel ladite propriété chimique est la dureté.

10. Appareil (APP) de préparation d'une boisson à partir d'un solvant (S) et d'ingrédients (IG), ledit appareil comprenant :
- un récipient (CO) permettant de contenir ledit solvant,
- un infuseur (IF) permettant de contenir lesdits ingrédients,
- un premier système (SYS1) de transport dudit solvant dudit récipient (CO) audit infuseur (IF),
**caractérisé en ce que** l'appareil comprend aussi :
- un deuxième système (SYS2) de réglage de la température du solvant à transporter audit infuseur (IF) à une première température donnée (T1) pendant une première période de temps (DT1) et de réglage de la température du solvant résultant de l'infusion d'ingrédients avec le solvant à ladite première température donnée (T1), à une deuxième température donnée (T2) pendant une deuxième période de temps (DT2).

11. Appareil selon la revendication 10, dans lequel :
- ledit infuseur (IF) est placé à l'intérieur du récipient (CO), et
- ledit premier système (SYS1) comprend un canal de communication (CH) reliant la partie intérieure du récipient (CO) et la partie intérieure de l'infuseur (IF).

12. Appareil selon la revendication 10, dans lequel :
- ledit infuseur (IF) est placé à l'extérieur du récipient (CO),
- ledit premier système (SYS 1) comprend un mécanisme de pompage pour transporter le solvant (S) dudit récipient (CO) audit infuseur (IF),
- ledit appareil comprend en outre un canal de retour pour transporter le solvant (S) dudit infuseur (IF) audit récipient (CO).

13. Appareil selon la revendication 12, dans lequel ledit mécanisme de pompage est adapté au transport du solvant (S) à un premier débit donné (R1) pendant ladite première période de temps (DT1) et adapté au transport du solvant (S) à un deuxième débit donné (R2) pendant ladite deuxième période de temps (DT2).

14. Appareil selon la revendication 10, comprenant en outre une chambre (CB) pour renfermer ledit infuseur (IF) et un troisième système (SYS3) de réglage de la pression à l'intérieur de ladite chambre (CB) à un premier niveau de pression donné (P1) pendant ladite première période de temps (DT1) et à un deuxième niveau de pression donné (P2) pendant ladite deuxième période de temps (DT2).

15. Appareil selon la revendication 10, comprenant en outre un matériau de résine d'échange d'ions à travers lequel ledit solvant (S) est censé passer pour modifier la propriété chimique dudit solvant.
